# EUROPÄISCHE PATENTANMELDUNG

(11) **EP 1 008 487 A1**
(43) Veröffentlichungstag der Anmeldung: **14.06.2000**
(21) Anmeldenummer: 99250431.6
(22) Anmeldetag: 06.12.1999
(51) Int. Cl.: B60Q 1/14

(54) **Photosensor-gesteuerter Schalter mit Vorrichtung zu befristeter Intervention sowie Schaltautomatik für Kraftfahrzeugleuchten**

(30) Priorität: 08.12.1998 DE 19858938
(71) Anmelder: Slamecka, Ernst, 13595 Berlin (DE)
(72) Erfinder: Slamecka, Ernst, 13595 Berlin (DE)

(57) **Zusammenfassung**

Für helligkeitsabhängiges Ein- und Ausschalten von Kfz.-Leuchten mit Photosensorschalter und die Möglichkeit der Fahrer-Intervention ist im Leuchtenstromkreis ein einziger Schalter (2) angeordnet: sein Steuerungskreis enthält zusätzlich zur Photosensorsteuerung (2.5) eine Interventionsvorrichtung (2.7) und eine Vorrichtung zur Befristung der Intervention (2.6).

Die Photosensorsteuerung sämtlicher Kfz.-Außenleuchten, Blinkleuchten ausgenommen, ist kombiniert mit der Steuerung dieser Leuchten in Abhängigkeit vom Betriebszustand des Kfz.-Antriebsmotors, was praktisch durch den Kfz.-Zündschlüssel erfolgt: automatisch werden mit Betätigung des Zündschlüssels der Fahrleuchtenschalter (5) und der Standleuchten-Schlußleuchtenschalter (4) mit Wiedereinschaltvorrichtung (4.5) und automatischer zeitverzögerter Wiederausschaltvorrichtung (4.4) ein bzw. ausgeschaltet; ebenso werden die Umschalter (8,9) von Parkleuchten- auf Blinkleuchtenbetrieb geschaltet bzw. wieder zurück, sodaß weiter ein einziger Park- und Blinkleuchtenwahlschalter (7) genügt.

## Beschreibung

Die Erfindung betrifft Ausführung und schaltplanmäßige Anordnung elektrischer Schalter zum photosensorgesteuerten Betrieb von elektrischen Leuchten insbesondere an straßengebundenen Kraftfahrzeugen, wobei im Falle eines nicht in Betrieb befindlichen Antriebsmotors des Kraftfahrzeuges die Energieversorgung der Leuchten durch eine Bordbatterie erfolgt und im Falle eines in Betrieb befindlichen Antriebsmotors vornehmlich durch einen Bordgenerator.

Eine Lehre eines photosensorgesteuerten Betriebs von Kraftfahrzeugleuchten ist durch die DE 41 09 348 A1 bekannt. Gemäß dieser Lehre ist ein photosensorgesteuerter Schalter zusätzlich einem "Beleuchtungsschalter" parallelgeschaltet. Diese Parallelschaltung soll dem Kraftfahrzeuglenker die Möglichkeit geben, bei Tag in Grenzfällen die Fahrzeugbeleuchtung manuell einschalten zu können. Ist der Grenzfall vorüber, kann leicht vergessen werden, den Beleuchtungsschalter wieder auszuschalten. Die Fahrtleuchten können dann u.U. bis zum Fahrtende eingeschaltet bleiben - bei hellem Sonnenschein fällt das kaum auf. Und am folgenden Tag bei Start wieder im hellen Sonnenschein kann erneut mit eingeschalteten Fahrtleuchten losgefahren werden. Die Photsensorsteuerung nach dieser Lehre schützt also nicht vor unnötigem Verbrauch elektrischer Energie.
Zwei Schalter im Fahrtleuchtenstromkreis für photosensorgesteuertes und fallweise manuelles Schalten der Fahrtleuchten bedeutet auch einen erheblichen Mehraufwand an Material und Montageraum.
Auch umfaßt die Lehre nur ein photosensorgesteuertes Schalten der Fahrtleuchten. Zu einem photosensorgesteuerten Betrieb etwa von Parkleuchten werden keine Angaben gemacht; dabei können Parkleuchten schon bei Tag eingeschaltet werden und belasten dann, bis zum Abend unnütz leuchtend, die Bordbatterie, was sich einige Tage wiederholen und die Bordbatterie bis zur Startuntauglichkeit entladen kann.

Eine Vorrichtung, mit der Parkleuchten wahlweise entweder manuell eingeschaltet werden können oder durch eine Phosensorsteuerung automatisch nur für kurze Zeit eingeschaltet werden, ist durch die Lehre der DE 39 39 240 A1 bekannt. Bei Betrieb der Parkleuchten mit Photosensorsteuerung wird während der Annäherung eines beleuchteten Kraftfahrzeuges an ein unbeleuchtetes mit der erfindungsgemäßen Photosensorsteuerung ausgestattetes parkendes Kraftfahrzeug an diesem eine Beleuchtung eingeschaltet.
Das kann leicht problematisch werden, wenn das beleuchtete Kraftfahrzeug aus einer Seitenstraße kommend nach rechts in eine Hauptstraße einbiegt und dort das unbeleuchtete Kraftfahrzeug ganz in der Nähe der rechten Straßenecke parkt. Dabei kann es Konstellationen geben, in denen die Photosensoren des unbeleuchteten Kraftfahrzeugs von den Lichtstrahlen der Fahrtleuchten des einbiegenden Kraftfahrzeugs nur zum Teil und daher für eine Reaktion nicht ausreichend oder zu spät getroffen werden. In beiden Fällen besteht das Risiko, daß der Fahrer des einbiegenden Kraftfahrzeugs das unbeleuchtet parkende Kraftfahrzeug übersieht und streift. Ähnliche Risikokonstellationen können sich an Straßenkurven mit starker Krümmung einstellen.
Auch ergibt sich aus der Erläuterung der Ausführungsbeispiele der Vorrichtung zur wahl- und zeitweisen Photosensorsteuerung der Parkleuchten, daß dazu zwei Schalter im Parkleuchtenstromkreis vorgesehen sein müssen mit den bereits dargelegten Nachteilen.
Schließlich fehlt in den Lehren der beiden vorstehend kommentierten Druckschriften eine vollständige Entlastung des Fahrers eines Kraftfahrzeugs von der Bedienung der Kraftfahrzeugleuchten.

Die Erfindung stellt sich zur Aufgabe, den eingangs dargelegten Stand der Technik zu verbessern und dabei die Photosensorsteuerung der Kraffahrzeugleuchten zu einer vollautomatischen Steuerung dieser Leuchten auszubauen. Diese Erfindungsaufgabe wird durch die Merkmale des Patentanspruchs 1 gelöst. Vorteilhafte Weiterbildungen der Erfindung sind in den Unteransprüchen beschrieben.

Das Wesentliche und auch Vorteilhafte an der Erfindung besteht in folgendem:
1. Sowohl für eine Photosensorsteuerung (1.5), (2.5) als auch für eine Fahrersteuerung der Kraftfahrzeugleuchten (14), (15), (16) ist nur noch ein einziger Schalter (1), (2) vorgesehen;
   Außerdem weist der Steuerungsbereich dieses Photosensorschalters (1), (2) einen Interventionsschalter (1.7), (2.7) für den Fahrer des Kraftfahrzeugs auf;
   mit dem Interventionsschalter kann der Fahrer gegebenenfalls die Kraftfahrzeugleuchten auch am hellichten Tag einschalten;
   mit dem Interventionsschalter (1.7), (2.7) ist eine Rückstellvorrichtung (1.6), (2.6) gekoppelt, die den fallweise betätigten Interventionsschalter zeitlich verzögert auf die Ausgangsposition "Photosensorsteuerung" zurückstellt.
2. Die Schalter zum Schalten der Fahrt- und Standleuchten (5) bzw. (4) werden bei der Inbetriebsetzung des Antriebsmotors des Kraftfahrzeugs automatisch eingeschaltet, wobei ein jeder über den Photosensorschalter (1), (2) mit der Plus-Schiene (20) des elektrischen Bordnetzes verbunden ist;
   bei der Außerbetriebsetzung des Antriebsmotors des Kraftfahrzeuges wird der Fahrtleuchtenschalter (5) automatisch ausgeschaltet;
   das automatische Ausschalten des Standleuchtenschalters (4) erfolgt im Normalfall zeitverzögert.
3. Die Parkleuchten (15.1), (16.1) bzw. (15.2), (16.2) das Kraftfahrzeugs werden bei der Außerbetriebsetzung des Antriebsmotors automatisch durch die Umschalter (9) und (8) über den Photosensorschalter (1), (2) an die Plus-Schiene (20) des elektrischen Bordnetzes geschaltet;
   bei der Inbetriebsetzung des Antriebsmotors des Kraftfahrzeuges schalten die Umschalter (8) und (9) von Parkleuchtenbetrieb über den Photosensorschalter auf über den Blinkgeber (19) direkt von der Plus-Schiene (20) gespeisten Betrieb der Blinkleuchten (17) um.
Nun läßt sich das Wesentliche und Vorteilhafte an der Erfinnoch weiter komprimiert ausdrücken:
- die Photosensorsteuerung der Leuchten eines Kraftfahrzeuges mit Interventionsmöglichkeit seines Fahrers ist auf einen Schalter (1), (2) in der Stromleitungsführung reduziert
- die Betätigung eines Fahrtleuchtenschalters (5) und eines Standleuchtenschalters (4) erfolgt automatisch bei einer Inbetriebsetzung und bei einer Außerbetriebsetzung des Antriebsmotors eines Kraftfahrzeuges, wobei diese Schalter derart in der Stromleitungsführung angeordnet sind, daß in einen Betrieb der Leuchten des Kraftfahrzeuges mit diesen Schaltern stets der Schalter (1), (2) mit Steuerung durch einen Photosensor (1.5), (2.5) einbezogen ist
- für einen photosensorgesteuerten Betrieb der Parkleuchten (15.1), (16.1) bzw.(15.2), (16.2) über den Photosensorschalter (1), (2) bei Außerbetriebsetzung des Antriebsmotors des Kraftfahrzeuges und Verlassen desselben sind Umschalter vorgesehen zur Umgehung von Fahrtleuchtenschalter (5) und Standleuchtenschalter (4), die bei außer Betrieb gesetztem Antriebsmotor und Verlassen des Kraftfahrzeuges ausgeschaltet sind.
Aus der vorstehenden Zusammenfassung des Wesentlichen an der folgt, daß diese auch kurz charakterisiert werden kann als:
"Zündschlüssel- und Photosensorgesteuerte Kraftfahrzeugleuchtenschalter- Vollautomatik mit Fahrer-Interventionsoption".
Der Fahrer braucht zur Bedienung der Leuchten seines Kraftfahrzeuges nur noch den Zündschlüssel zu betätigen und gegebenenfalls den Interventionsschalter (1.7), (2.7) bzw.den Parkleuchtenwahlschalter (7).

Die Erfindung wird anhand von Ausführungsbeispielen näher erläutert; es zeigen:
- Figur 1:: Schaltplan von Leuchten an einem Kraftwagen, Photosensorschalter (1) mit Vorrichtung für zeitlich begrenzbare Fahrersteuerung als Einspeiseschalter gebaut und eingesetzt.
- Figur 2:: Schaltplan von Leuchten an einem Kraftfahrzeug, Photosensorschalter (2) mit Vorrichtung für zeitlich begrenzbare Fahrersteuerung als Verteilerschalter gebaut und eingesetzt.

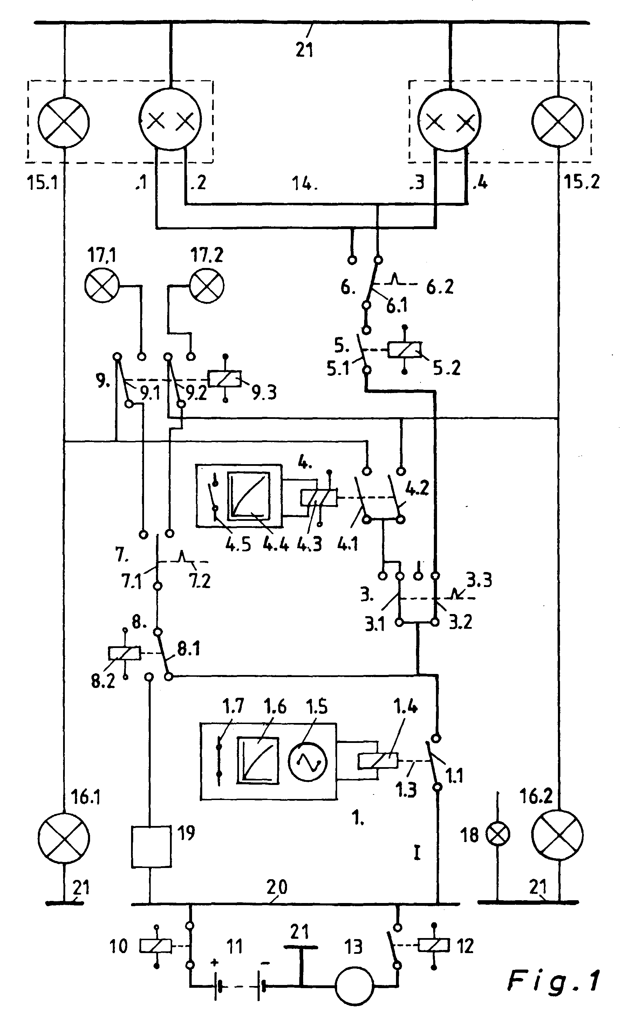

Im Schaltplan einer Leuchtenanlage eines Kraftfahrzeugs, Figur 1, gemäß dem ersten Ausführungsbeispiel ist der Photosensorschalter (1) in der Stromleitungsführung (I) von der Plus-Sammelschiene (20) zu den Kraftfahrzeugleuchten als Einspeiseschalter gebaut und eingesetzt. Die Arbeitsweise der Vollschaltautomatik wird nun erläutert anhand typischer Betriebszustände eines damit ausgestatteten Kraftfahrzeugs während einer sowohl Tag als auch Nacht einschließenden Fahrt.

Das Kraftfahrzeug ist zunächst abgestellt bei Tageslicht. Photosensorschalter (1), Standleuchtenschalter (4) und Fahrtleuchtenschalter (5) stehen offen; Leuchtenartwahlschalter (3) ist mit gerastetem Betätigungsglied (3.3) der Schalterkontakte (3.1), (3.2) eingeschaltet in Fahrtleuchten- und Standleuchtenposition; Fahrtleuchtenwahlschalter (6) steht mit gerastetem Betätigungsglied (6.2) des Schalterkontakts (6.1) in Abblendleuchtenposition; Umschalter (8) ist mit Schaltkontakt (8.1) auf Stromleitungsführung über Schalter (1) geschaltet; Umschalter (9) ist mit Schaltkontakten (9.1), (9.2) auf Stromleitungsführung zu den Parkleuchten (15.1), (16.1) bzw. (15.2), (16.2) geschaltet; Blinker-Parkleuchtenschalter (7) befindet sich in Mittelstellung; Batterieschalter (10) ist geschlossen; Generatorschalter (12) ist offen.

Der Antriebsmotor des Kraftfahrzeugs wird in Betrieb gesetzt. Mit einem sogenannten Zündschlüssel oder allgemein - für Otto- und Dieselmotoren geltend - mit einem Start- Stopschlüssel werden mittels eines nicht mehr dargestellten Schalters die folgenden Schalter automatisch ein- bzw. umgeschaltet: Schalterkontakt (5.1) durch Relais (5.2); Schalterkontakte (4.1), (4.2) durch Relais (4.3) mit zwei gleichsinnigen Relaiswicklungen; Umschalterkontakt (8.1) auf Stromleitungsführung über Blinker (19) zur Plus-Sammelschiene (20) durch Relais (8.2); Umschalterkontakte (9.1), (9.2) auf Stromleitungsführung zu den Blinkleuchten (17.1), (17.2) durch Relais (9.3). Dann wird mit dem kurzzeitig in Position Anlassen gehaltenen Start- Stopschlüssel der Anlassermotor kurzzeitig eingeschaltet; der Antriebsmotor des Kraftfahrzeugs springt an; der Bordgenerator (13) führt Spannung; der Generatorschalter (12) wird automatisch durch sein Relais eingeschaltet.

Das Kraftfahrzeug befindet sich auf Fahrt bei Tageshelligkeit. Besondere Verhältnisse lassen dem Fahrer das Einschalten der Fahrtleuchten notwendig erscheinen. Dazu schaltet er die Steuerungsfunktion des Photosensors (1.5) im Steuerungsbereich des Photosensorschalters (1) aus, worauf dieser gemäß den Schalterstellungen im Schaltplan Fahrtleuchten und Standleuchten einschaltet. Eine solche Intervention kann auf verschiedene Weise erfolgen:
- durch Handbetätigung eines Interventionsschalters (1.7) im Steuerungsbereich des Photosensorschalters (1); symbolhaft dargestellt;
- durch akustische Betätigung eines Interventionsschalters im Steuerungskreis des Photosensorschalters (1) mittels einer Mikrophonanordnung als akustischer Wandler, der ein akustisches Signal, z.B. "Licht ein", in eine Interventionsschalter-Betätigung transformiert, was nicht dargestellt ist;
- durch optisches Abdecken des Photosensors (1.5) im Steuerungsbereich des Photosensorschalters (1) mittels einer Schaltblende, was manuell, elektromechanisch oder akustoelektromechanisch erfolgen kann (nicht dargestellt).
Mit dem Betätigen des Interventionsschalters (1.7) wird eine Rückstellvorrichtung (1.6) aktiviert, die z.B. nach fünfzehnminutiger Einschaltdauer des Photosensorschalters (1) die Stillegung der Steuerungsfunktion des Photosensors (1.5) elektrisch oder optisch aufhebt. Die vorstehend erläuterte Intervention des Fahrers ist gegebenenfalls wiederholbar, oder es wird a priori eine längere Dauer der Interventionswirkung eingestellt.
Das Symbol für die Rückstellvorrichtung (1.6) soll den zeitlichen Verlauf einer Strom- oder Spannungsgröße in einer Relaisanordnung bedeuten. Sobald eine dieser Größen einen einer vorab eingestellten Wirkungsdauer einer Intervention entsprechenden Wert erreicht hat, führt ein darauf ansprechendes Relais den Interventionsschalter (1.7) in seine Ausgangsposition zuzurück, worauf der Photosensorschalter (1) ausschaltet.

Der Fahrweg des Kraftfahrzeuges führt durch ein Straßentunnel. Bei der Einfahrt in den Tunnel läßt der Photosensor (1.5) mittels des Relais (1.4) den Photosensorschalter (1) die Fahrtleuchten (14.2) und (14.4) sowie die Standleuchten (15.1) und (15.2) einschalten. Damit eine Beleuchtung der Straße im Tunnel durch Leuchtstofflampen das Einschalten der Kraftfahrzeugleuchten durch den Photosensorschalter (1) nicht verhindert, besteht dessen Photosensor aus einem Photowiderstand, oder aus Halbleitermaterial, oder aus einer Photodiode, oder aus einem Phototransistor, deren spektrale Empfindlichkeit auf die Wellenlänge des einstrahlenden Leuchtstofflampenlichtes für ein Ansprechen der Steuerung nicht ausreicht. Bei der Ausfahrt aus dem Tunnel läßt der Photosensor den Photosensorschalter im Tageslicht die Kraftfahrzeugleuchten wieder ausschalten, was zeitverzögert erfolgen kann.
Ein ähnlicher Photosteuerungsvorgang ergibt sich, wenn das Kraftfahrzeug eine Schlechtwetterzone mit starker Abdunkelung des Tageslichtes passiert.

Im Verlauf der Fahrt des Kraftfahrzeuges setzt die Abenddämmerung ein. Der Photosensor läßt bei Absinken der das Kraftfahrzeug umgebenden Helligkeit unter einen Ansprech-Wert den Photosensorschalter (1) entsprechend der Stellung des Leuchtenartwahlschalter (3) die Fahrtleuchten (14) und die Standleuchten (15), (16) einschalten. Empfehlenswert wären für alle mit Photosensorschaltern mit sich selbst befristender Interventionsvorrichtung ausgestattete Kraftfahrzeuge, und es sollten im Interesse einer erhöhten Sicherheit im Straßenverkehr alle Kraftfahrzeuge sein, standardisierte Dämmerungsansprechwerte und Montageorte der Photosensoren. Mit dem manuell zu betätigenden Leuchtenartwahlschalter (3) mit Rastung des Kontaktbetätigungsgliedes (3.3) kann der Fahrer des Kraftfahrzeuges nur mit Standlicht fahren, falls dies etwa regional für eine Fahrt auf gut beleuchteten Straßen vorgeschrieben sein sollte.

Die nächtliche Fahrt mit dem Kraftfahrzeug wird unterbrochen. Der Fahrer lenkt das Kraftfahrzeug an den rechten Straßenrand und setzt dann mit dem Start- Stopschalter (nicht dargestellt) den Antriebsmotor außer Betrieb. Dabei wird der Relais-betätigte Fahrtleuchtenschalter (5) automatisch ausgeschaltet. Außerdem schaltet der Relais-betätigte Umschalter (9) von Blinkleuchtenbetrieb auf Parkleuchtenbetrieb um. Der Umschalter (8) schaltet von Einspeisung von der Plus-Sammelschiene (20) über den Blinkgeber (19) an die Blinkleuchten (17.1) bzw. (17.2) auf Einspeisung über den Photosensorschalter (1) an die Parkleuchten um. Der Fahrer schaltet mit dem nun als Parkleuchtenschalter dienenden Schalter (7) die Standleuchte links (15.1) und die Schlußleuchte links (16.1) als Parkleuchten ein. Mit einem Ziehen des Start- und Stopschlüssels wird automatisch der Standleuchtenschalter (4) zeitverzögert ausgeschaltet.
Falls bei anderer Gelegenheit am Tage geparkt wird und das Parken bis in die Nacht hinein dauern soll, bewirkt der den Parkleuchten vorgeschaltete Photosensorschalter (1), daß diese Leuchten erst in der Dämmerung eingeschaltet werden, was die Bordbatterie schont.
Die Parkleuchten können auch tagsüber bei starker Eintrübung durch den Photosensorschalter (1) eingeschaltet werden, was einen Schutz des parkenden Kraftfahrzeuges durch eine rationell eingesetzte Parkbeleuchtung bedeutet.
Zur Fortsetzung der nächtlichen Fahrt siehe unter "Der Antriebsmotor wird in Betrieb gesetzt".

Die nächtliche Faht mit dem Kraftfahrzeug wird beendet. Der Fahrer lenkt das Kraftfahrzeug auf einen Stellplatz und setzt mit dem Start- Stopschlüssel den Antriebsmotor außer Betrieb. Damit wird automatisch der Relais-betätigte Fahrtleuchtenschalter (5) ausgeschaltet bei noch eingeschaltetem Photosensorschalter (1). Die Standleuchten (15), (16) und die Kennzeichenleuchten (18) sind durch den Standleuchtenschalter (4) weiter eingeschaltet. Dieser durch das Relais (4.3) betätigte Schalter schaltet erst beim Ziehen des Start- Stopschlüssel automatisch aus, wenn dadurch in der Relaiswicklung, deren Verbindung mit dem Auslösestromkreis nicht dargestellt ist, der Stromfluß unterbrochen wird. Das Ausschalten des Standleuchtenschalter kann gleichzeitig mit dem Ziehen des Schlüssels erfolgen oder dagegen zeitverzögert; letzteres soll hier zutreffen. Zu diesem Zweck ist der Schalter (4) mit einer Ausschaltverzögerungsvorrichtung (4.4) ausgestattet. Das Symbol zeigt den zeitlichen Verlauf einer Strom- oder Spannungsgröße als auslösende Größe in einem nicht dargestllten Auslösekreis. Sobald darin eine dieser Größen einen einer vorab eingestellten Verzögerungsdauer entsprechenden Wert erreicht hat, schaltet das Relais (4.3) die Schalterkontakte (4.1), (4.2) aus. Falls einmal die eingestellte Verzögerungsdauer zu kurz sein sollte, kann der Standleuchtenschalter (4) durch Einschalten von Schalter (4.5) im Stromkreis der zweiten gleichsinnigen Relaiswicklung wieder eingeschaltet werden. Das Ausschalten des Standleuchtenschalters erfolgt weiterhin zeitverzögert und automatisch durch eine nicht dargestellte Kopplung des Relaisschalters (4.5) für manuelle Betätigung mit der Ausschaltverzögerungsvorrichtung.

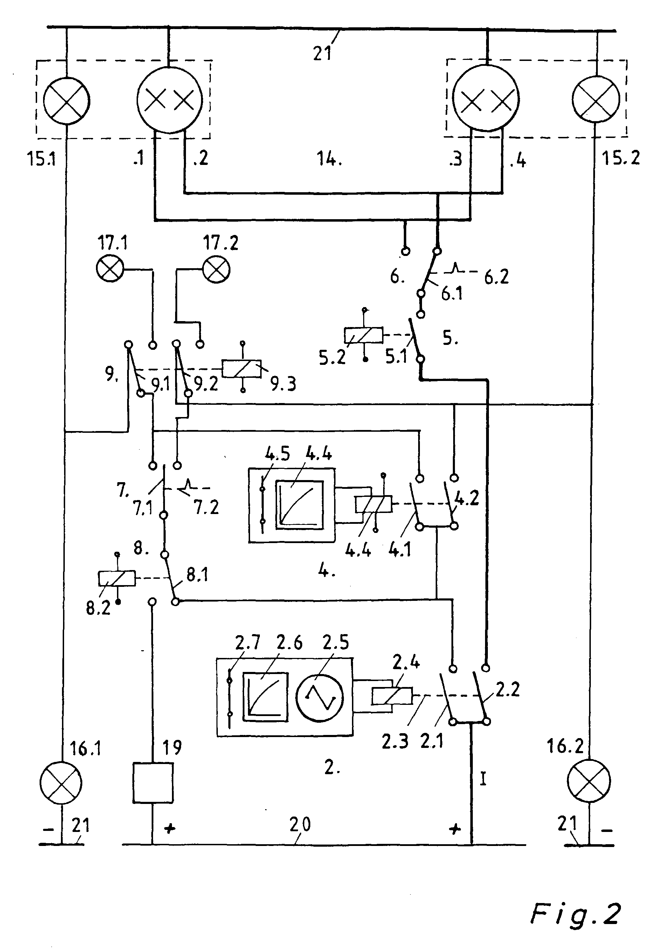

Im zweiten Ausführungsbeispiel ist der Photosensorschalter (2) im Leuchtenschaltplan nach Figur 2 in der Stromleitungsführung (I) bereits als Verteilerschalter von Strom und Spannung gebaut und eingesetzt. Alle anderen Schalter und die Leuchten verblieben - bis auf den vorteilhaft nicht mehr verwendeten Leuchtenartwahlschalter (3) und die nur nicht ein zweites Mal dargestellte Kennzeichenleuchte sowie Energieversorgung - nach sowohl Anordnung als auch Funktion unverändert, sodaß sich auch die Bezugszeichen nicht änderten. Mit dieser Prämisse gilt die Erläuterung des ersten Ausführungsbeispiels auch für das zweite. Durch Wegfall des Leuchtenartwahlschalters entfällt zunächst die Möglichkeit unter den schon dargelegten besonderen Verhältnissen während der Fahrt von Fahrtlicht auf Standlicht umschalten zu können. Sollte dieses Umschalten unabdingbar sein, kann dafür im Schaltplan der Figur 2 z.B. in der Stromleitungsführung von Photosensorschalter (2) zu Abblendschalter (6) ein manuell zu betätigender Schalter mit Leuchtenartwahlfunktion installiert werden.

Der Photosensorschalter (1), (2) ist z.B. im Innenraum des Kraftfahrzeuges hinter der Frontscheibe und noch im Wisch-Waschbereich des Scheibenwischers ----- an der Instrumentenabdeckung angeordnet, wobei eine Abschirmung des Photosensors zumindest gegen horizontal einfallendes Licht angebracht ist.

Vorteilhaft ist es auch, den Photosensor als vom Schalterteil räumlich getrenntes Bauteil auszuführen und dieses mit dem Schalterteil durch eine elektrische Leitung (isoliertes Elektrokabel) zu verbinden. Eine solche Ausführung ermöglicht es, die Anbringungsorte für Photosensorteil und Schalterteil hinsichtlich Lichteinstrahlung und Montage bzw. nur Montage für jedes Bauteil optimal auszuwählen. Weiter vorteilhaft ist es, das Ausschalten der Fahrtleuchten durch den Photosensorschalter bei ausreichender Lichteinstrahlung auf den Photosensor zeitlich zu verzögern durch Einbau einer Ausschaltverzögerungsvorrichtung in den Steuerungskreis dieses Schalters, was nicht dargestellt ist.

Die Erfindung ist nicht beschränkt auf die nur als Ausführungsbeispiele angeführte und erläuterte Ausführungsweise, was auch für die wegen der Anschaulichkeit und Übersichtlichkeit gewählten einzelnen Bauelemente gilt; so können an Stelle elektromechanischer Schalter auch Schalttransistoren mit Zubehör eingesetzt werden. Vielmehr umfaßt die Erfindung alle technischen Entsprechungen der beschriebenen und beanspruchten technischen Merkmale sowie deren Kombinationen, sofern diese in Sinne der Erfindung ausgeführt sind, sodaß die Erfindung bei ihrer praktischen Anwendung auch anders ausgeführt sein kann als spezifisch beansprucht.

## Patentansprüche

1. Photosensor-gesteuerter Schalter mit Vorrichtung zu befristeter Intervention sowie Schaltautomatik für Kraffahrzeugleuchten, deren Versorgung mit elektrischer Energie im Falle eines nicht in Betrieb befindlichen Antriebsmotors durch eine Bordbatterie erfolgt und im Falle eines im Betrieb befindlichen Antriebsmotors durch einen Bordgenerator, gekennzeichnet durch folgende Merkmale:
in einer Stromleitungsführung zu den Kraftfahrzeugleuchten ist jeweils ein elektrischer Schalter (1), (2) angeordnet, in dessen Steuerung ein Photosensor (1.5), (2.5) angeordnet ist zum Steuern des Schaltens des Photosensorschalters (1), (2) in Abhängigkeit von der Helligkeit in der Umgebung des Kraftfahrzeugs, wobei Mittel, deren Anwendung es dem Fahrer des Kraftfahrzeuges ermöglicht, die steuernde Funktion des Photosensors (1.5), (2.5) in der Steuerung des Photosensorschalter (1), (2) für eine begrenzte Zeit stillzulegen, in der Steuerung des Photosen
sorschalters (1), (2) angeordnet sind.

2. Automatik nach Anspruch 1, gekennzeichnet durch folgende Merkmale:
die Mittel für die zeitlich begrenzte Stillegung der steuernden Funktion des Photosensors (1.5), (2.5) in der Steuerung des Photosensorschalters (1), (2) bestehen aus einem Interventionsschalter (1.7), (2.7), dessen einen Steuerungskreis aktivierendes Öffnen oder Schließen durch den Fahrer des Kraftfahrzeugs die Steuerungsfunktion des Photosensors (1.5), (2.5) blockiert, sodaß ein Relais (1.4), (2.4) in der Steuerung des Photosensorschalter (1), (2) diesen bei Tageshelligkeit solange einschaltet bis eine durch das Betätigen des Interventionsschalters (1.7), (2.7) aktivierte Rückstellvorrichtung (1.6), (2.6) mit Zeitverzögerung entsprechend der begrenzten Einschaltzeit den Interventionsschalter (1.7), (2.7) in seine Ausgangsposition zurückstellt, wodurch die Blockierung der Steuerungsfunktion des Photosensors aufgehoben wird und der Photosensorschalter bei ausreichender Tageshelligkeit ausschaltet.

3. Automatik nach Anspruch 1 oder 2, gekennzeichnet durch folgende Merkmale:
der Photosensorschalter (1), (2) ist ist in der Stromleitungsführung (I) zu den Kraftfahrzeugleuchten als Einspeiseschalter (1) oder als Verteilerschalter (2) angeordnet.

4. Photosensor-Schaltautomatik,
gekennzeichnet durch folgende Merkmale:
frühestens bei Inbetriebsetzung und auch Außerbetriebsetzung des Antriebsmotors eines Kraftfahrzeuges erfolgt automatisch ein Einschalten bzw. Ausschalten zumindest eines Fahrtleuchtenschalters (5) und eines Standleuchtenschalters (4), wobei diese Schalter in der Stromleitungsführung zu den Kraftfahrzeugleuchten derart angeordnet sind, daß zumindest der Betrieb von Fahrtleuchten (14.1), (14.3) bzw. (14.2), (14.4) und von Standleuchten (15.1), (15.2) sowie Schlußleuchten (16.1), (16.2) durch den Photosensorschalter (1), (2) in Abhängigkeit von der Umgebung des Kraftfahrzeuges gesteuert wird.

5. Automatik nach Anspruch 4, gekennzeichnet durch folgende Merkmale:
bei der Inbetriebsetzung des Antriebsmotors des Kraftfahrzeuges mit einem durch einen Start- Stopschlüssel direkt oder indirekt betätigten Schalter werden der Relais-betätigte Fahrtleuchtenschalter (5) sowie der Relais-betätigte Standleuchtenschalter (4) automatisch geschlossen;
bei der Außerbetriebsetzung des Antriebsmotors des Kraftfahrzeuges mittels eines durch einen Start- Stopschlüssel direkt oder indirekt betätigten Schalters wird der Relaisbetätigte Fahrtleuchtenschalter (5) automatisch geöffnet; der Relais betätigte Standleuchtenschalter (4) wird bei der Außerbetriebsetzung des Antriebsmotors des Kraftfahrzeuges mittels eines durch einen Start- Stopschlüssel direkt oder indirekt betätigten Schalter spätestens beim Abziehen des Start- Stopschlüssels automatisch mit oder ohne Zeitverzögerung geöffnet;
im Verlauf der vorstehend dargelegten automatischen Betätigungen des Fahrtleuchtenschalters (5) und des Standleuchtenschalters (4) in Abhängigkeit vom Betrieb des Antriebsmotors der Kraftfahrzeuges werden die Fahrtleuchten und zumindest die Standleuchten sowie die Schlußleuchten durch den Photosensorschalter (1), (2) in Abhängigkeit von der Helligkeit in der Umgebung des Kraftfahrzeug gesteuert mit Interventionsvorrichtung für den Fahrer des Kraftfahrzeuges.

6. Photosensor-gesteuerter Schalter mit Vorrichtung zu befristeter Intervention sowie Schaltautomatik für Kraftfahrzeugleuchten,deren Versorgung mit elektrischer Energie im Falle eines nicht in Betrieb befindlichen Antriebsmotors durch eine Bordbatterie erfolgt und im Falle eines in Betieb befindlichen Antriebsmotors durch einen Bordgenerator, gekennzeichnet durch folgende Merkmale:
bei außer Betrieb gesetztem Antriebsmotor des Kraftfahrzeuges werden daran angeordnete Parkleuchten (15.1), 16.1) bzw. (15.2), (16.2) im Bedarfsfall durch einen Wahlschalter (7) mit elektrischer Reihen-Zwischenschaltung eines Photosensorschalters (1), (2) geschaltet, während bei in Betrieb gesetztem Antriebsmotor des Kraftfahrzeuges daran angeordnete Blinkleuchten (17.1) bzw. (17.2) im Bedarfsfall durch den Wahlschalter (7) ohne elektrische Zwischenschaltung des Photosensorschalters (1), (2) geschaltet werden.

7. Automatik nach Anspruch 6, gekennzeichnet durch folgende Merkmale:
in elektrischer Reihenschaltung mit dem Wahlschalter (7) ist ein erster Umschalter (8) angeordnet, der bei der Außerbetriebsetzung des Antriebsmotors des Kraftfahrzeuges den Park- und Blinkleuchtenwahlschalter (7) automatisch auf eine Stromleitungsführung in elektrischer Reihenschaltung mit dem Photosensorschalter (1), (2) an eine Sammelschiene (20) umschaltet, während ein zweiter Umschalter (9) automatisch von der Stromleitungsführung an die Blinkleuchten (17.1) bzw. (17.2) auf eine Stromleitungsführung zumindest zu den Standleuchten (15.1) bzw. (16.2) sowie zu den Schlußleuchten (16.1) bzw. (16.2) umschaltet; bei der Inbetriebsetzung des Antriebsmotors des Kraftfahrzeuges schaltet der zweite Umschalter (9) automatisch von der Stromleitungsführung zumindest an die Standleuchten und Schlußleuchten auf eine Stromleitungsführung an die Blinkleuchten um, während der erste Umschalter (8) automatisch von der Stromleitungsführung über den Photosensorschalter (1), (2) auf eine Stromleitungsführung von den Blinkleuchten (17.1) bzw. (17.2) über einen Blinkgeber (19) an die Sammelschiene (20) umschaltet.
